# EUROPÄISCHE PATENTSCHRIFT

(11) **EP 3 264 034 B1**
(45) Veröffentlichungstag und Bekanntmachung des Hinweises auf die Patenterteilung: **26.02.2020**
(21) Anmeldenummer: 16177381.7
(22) Anmeldetag: 30.06.2016
(51) Int. Cl.: G01C 5/00, G01C 15/10

(54) **VERMESSUNGSGERÄT MIT HÖHENMESSSYSTEM UND VERFAHREN ZUM MESSEN EINER HÖHE**
MEASURING DEVICE WITH HEIGHT MEASUREMENT SYSTEM AND METHOD FOR MEASURING A HEIGHT
APPAREIL DE MESURE AVEC SYSTÈME DE MESURE DE HAUTEUR ET PROCÉDÉ DE MESURE D'UNE HAUTEUR

(43) Veröffentlichungstag der Anmeldung: 03.01.2018
(73) Patentinhaber: Leica Geosystems AG, 9435 Heerbrugg (CH)
(72) Erfinder: BERNHARD, Heinz, CH-9442 Berneck (CH); HINDERLING, Jürg, CH-9437 Marbach (CH); TRABER, Alice, CH-9000 St.Gallen (CH)
(74) Vertreter: Kaminski Harmann

(56) Entgegenhaltungen:
- EP-A1- 2 240 741
- EP-A1- 2 538 171

## Beschreibung

Die vorliegende Erfindung betrifft ein Verfahren zum Ermitteln der Höhe eines Vermessungsgerätes über dem Boden, sowie ein Höhenmesssystem zum Ausführen des Verfahrens und ein geodätisches Vermessungsgerät mit einem solchen System.

Zum Vermessen von Zielpunkten sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst. Typische Zielpunkte sind dabei Kirchtürme, Messlatten oder Retroreflektoren.

Allgemein bekannte Beispiele für solche geodätische Vermessungsgeräte stellen Theodolit, Tachymeter und Totalstation (die auch als elektronischer Tachymeter oder Computer-Tachymeter bezeichnet wird) dar. Eine geodätische Messvorrichtung des Standes der Technik ist beispielsweise in der Veröffentlichungsschrift EP 1 686 350 A1 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äußeren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z. B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z. B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z. B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z. B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z. B. durch Servomotoren erfolgt. Automatische Fokussiereinrichtungen für Zielfernrohre geodätischer Geräte sind z. B. aus den Dokumenten DE 19710722, DE 19926706 oder DE 19949580 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z. B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z. B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Das Ermitteln der Instrumentenhöhe über dem Bodenpunkt gehört zu den Arbeitsschritten beim geodätischen Vermessen, die noch nicht automatisiert sind und nachträglich, das heisst nach Abschluss der Messung, auch nicht mehr überprüft werden können. In bekannten Verfahren wird die Höhe des Theodolits über dem Bodenpunkt mit einem Massband, welches mit einem Hilfsadapter am Dreifuss befestigt wird, von Hand gemessen und der Messwert wird per Tastatur manuell eingegeben.

Es sind verschiedene Lösungsansätze bekannt, um die Instrumentenhöhe automatisch zu ermitteln. Wie in der CN 102 967 298 A beschrieben, kann am Fernrohr eine Vorrichtung vorgesehen sein, mit welcher der Benutzer den Bodenpunkt speziell anzielen kann.

Die Dokumente US 8,345,928 B2 und US 6,453,569 B1 offenbaren Messsysteme, die mit einer oder mehrerer Kameras zentrisch oder exzentrisch den Bodenpunkt aufnehmen, die Kameras um das Lot drehen und dann mittels Bildverarbeitung aus den Bildern die Instrumentenhöhe errechnen. Bei diesen Lösungen werden zwei-dimensionale Bilder des Bodens aufgenommen. Aus diesen wird mittels Bildverarbeitung und Zweilagenmessung die Instrumentenhöhe ermittelt. Dafür ist eine intensive Bildverarbeitung erforderlich. Um die erforderliche Genauigkeit über einen Bereich von 0,5 bis 5 Meter zu erreichen, muss ausserdem die Kamera nachfokussiert werden und die Exzentrizität der Kamera erhöht werden. Dies schränkt die Bedienerfreundlichkeit des Systems ein und macht das System wesentlich komplizierter und aufwendiger.

Alternativ könnte der geräteeigene Entfernungsmesser durch das Gerät hindurch auf den Bodenpunkt messen. Dieser Ansatz ist konstruktiv aber sehr aufwendig, da entweder der Weg durch die Achse frei sein müsste, oder die Achse mit Optikelementen umgangen werden muss. Auch muss durch den Dreifuss und die Stativschraube hindurch gemessen werden. Ein optisches Sensor Prinzip, welches zur Bestimmung einer Distanz zum. Bodenpunkt herangezogen werden könnte ist beispielsweise in der EP 2 538 171 A1 beschrieben.

Die EP 2 240 741 offenbart ein Verfahren zur Lokalisierung eines Vermessungsinstruments in Bezug auf eine Markierung, die sich auf Bodenhöhe befindet.

Es ist eine Aufgabe der vorliegenden Erfindung ein verbessertes Verfahren zum Messen der Höhe eines geodätischen Gerätes über dem Boden bereitzustellen.

Insbesondere ist es eine Aufgabe, ein solches Verfahren bereitzustellen, das für einen Benutzer einfacher zu bedienen ist, sowie eine verbesserte Funktionalität und eine geringere Fehleranfälligkeit aufweist.

Eine weitere Aufgabe der vorliegenden Erfindung ist es, ein geodätisches Gerät mit einer verbesserten Funktionalität zur Messung einer Höhe bzw. eines Abstands zum Boden bereitzustellen.

Eine weitere Aufgabe der vorliegenden Erfindung ist es, ein geodätisches Gerät mit einer verbesserten Funktionalität zur Messung neben einer Höhe bzw. eines Abstands zum Boden auch die seitlichen Ablagen in East and North bzw. X und Y bereitzustellen.

Insbesondere ist es eine Aufgabe, ein solches Gerät mit geringem konstruktivem Aufwand bereitzustellen, das die Funktionalität ohne zusätzliches Zubehör ausführen kann.

Eine weitere Aufgabe ist es, ein System zum Messen der Höhe bereitzustellen, mit dem geodätische Geräte mit geringem Aufwand nachrüstbar sind.

Mindestens eine dieser Aufgaben wird durch das geodätische Vermessungsgerät nach Anspruch 1, das Verfahren nach Anspruch 10 und/oder die abhängigen Ansprüche erfüllt.

Ein erster Aspekt der Erfindung betrifft ein Vermessungsgerät zur Positionsbestimmung eines Zielpunkts, mit Mitteln zum Ausrichten einer Zielachse des Vermessungsgeräts auf den Zielpunkt, Winkelmessfunktionalität zur hochpräzisen Erfassung der Ausrichtung der Zielachse, und Auswertemitteln zur Datenspeicherung. Erfindungsgemäss weist das Vermessungsgerät ein Höhenmesssystem zum Ermitteln einer Höhe des Vermessungsgerätes über dem Boden mittels Triangulation auf. Dieses Höhenmesssystem weist dabei mindestens ein Laserlot zum Aussenden eines, insbesondere kollimierten, Laserstrahls entlang einer Stehachse des Vermessungsgerätes auf einen Bodenpunkt und eine Erfassungseinheit mit einem Zeilensensor zum Erfassen einer diffusen Rückstreuung des Laserstrahls auf und ist zum Ermitteln einer Höhe des Vermessungsgerätes über dem Bodenpunkt basierend auf einer Position der diffusen Rückstreuung auf dem Zeilensensor ausgestaltet.

In einer Ausführungsform ist das Vermessungsgerät ein geodätisches Vermessungsgerät, insbesondere ein Theodolit, eine Totalstation oder ein Laserscanner, mit einer Basis und einer gegenüber der Basis um eine Stehachse drehbare Stütze, sowie einer gegenüber der Stütze um eine Querachse schwenkbaren Anzieleinrichtung mit einer eine optische Zielachse definierenden Objektiveinheit.

Gemäss einer besonderen Ausführungsform weist das geodätische Vermessungsgerät Mittel zum motorisierten Drehen der Stütze und zum motorisierten Schwenken der Anzieleinrichtung auf, und die Auswertemittel sind zur Steuerung der Ausrichtung der Anzieleinrichtung ausgestaltet.

In einer Ausführungsform weist das geodätische Vermessungsgerät eine elektronische Anzeige-Steuereinheit zur Steuerung des Vermessungsgerätes und zur Verarbeitung, Anzeige und Speicherung von Messdaten auf, beispielsweise auch zur Anzeige der ermittelten Höhe. Dabei ist die Anzeige-Steuereinheit an der Stütze angeordnet, und die Erfassungseinheit ist optisch stabil an der Anzeige-Steuereinheit angeordnet, insbesondere an einer Unterseite der Anzeige-Steuereinheit. In einer Ausführungsform des erfindungsgemässen Vermessungsgerätes sind die Erfassungseinheit und das Laserlot zueinander derart angeordnet, dass das Höhenmesssystem die Scheimpflug-Bedingung erfüllt. Insbesondere sind dabei das Laserlot und der Zeilensensor in bekannter räumlicher Position zueinander angeordnet.

Die Erfassungseinheit weist erfindungsgemäss ein linienförmiges Sichtfeld zum Erfassen der diffusen Rückstreuung des Laserstrahls auf, und das Höhenmesssystem weist eine Linienlasereinheit zum Projizieren einer linienförmigen Lasermarkierung auf den Boden auf, insbesondere wobei das Laserlot und die Linienlasereinheit eine Einheit bilden.

In einer Ausführungsform dieses Vermessungsgerätes sind die Linienlasereinheit und der Zeilensensor fest zueinander so angeordnet, dass die linienförmige Lasermarkierung zumindest weitgehend in das Sichtfeld projizierbar ist. Der Zeilensensor ist erfindungsgemäss ausgestaltet, die linienförmige Lasermarkierung zumindest teilweise zu erfassen.

Dabei ist das Höhenmesssystem dazu ausgestaltet, basierend auf der erfassten linienförmigen Lasermarkierung auf dem Boden ein Intensitätsprofil abzuleiten, und darauf basierend eine Grösse, relative Position (z. B. x,y,z oder E,N,h) oder Art eines auf dem Boden befindlichen normierten Bodenziels, insbesondere eines Grenzstein oder eines Vermarkungspunkt, zu erkennen.

In einer Ausführungsform dieses Vermessungsgerätes weist dieses eine Funktionalität zur Bestimmung eines Abstandes eines Ursprungs eines lokalen Koordinatensystems des Vermessungsgerätes zu dem Bodenpunkt auf. Dazu sind der Zeilensensor und die Linienlasereinheit auf dem Vermessungsgerät derart angeordnet, dass sie gemeinsam um mindestens 180° um die Stehachse drehbar sind. Vorzugsweise sind sie um mindestens 360° drehbar. Im Rahmen der besagten Funktionalität ist die Linienlasereinheit dazu ausgestaltet, eine linienförmige Lasermarkierung auf den Boden zu projizieren, der Zeilensensor ist dazu ausgestaltet, mit hoher Messfrequenz aus einer Vielzahl verschiedener Positionen die diffuse Rückstreuung der linienförmigen Lasermarkierung zu erfassen, und das Höhenmesssystem ist dazu ausgestaltet, basierend auf den erfassten diffusen Rückstreuungen der linienförmigen Lasermarkierung eine Vielzahl von Intensitätsprofilen abzuleiten und basierend auf der Vielzahl von Intensitätsprofilen eine Position - sowie ggf. eine Grösse oder Art - eines auf dem Boden befindlichen normierten Bodenziels (z. B. ein Grenzstein oder ein Vermarkungspunkt) oder eines von einem Benutzer abgelegten Hilfsbodenziels abzuleiten.

Insbesondere sind der Zeilensensor und die Linienlasereinheit auf dem Vermessungsgerät derart angeordnet, dass sie gemeinsam um mindestens 270° um die Stehachse drehbar sind, insbesondere um 360°. Eine Drehung im Rahmen der Funktionalität kann insbesondere auch motorisiert erfolgen. In einer weiteren Ausführungsform weist das erfindungsgemässe Vermessungsgerät eine Kamera auf, und ist dazu ausgestaltet, mittels Bilderkennung ein auf dem Boden befindliches Ziel, d. h. ein normiertes Bodenziel, z. B. einen Grenzstein oder einen Vermarkungspunkt, oder ein bekanntes Hilfsbodenziel, z. B. ein Ablage-Bodenziel, zu erkennen und einem in einem Speicher abgespeicherten Datensatz, der mindestens Daten über eine räumliche Ausdehnung des Ziels umfasst, zuzuordnen. Das Höhenmesssystem ist in dieser Ausführungsform dazu ausgestaltet, den entsprechenden Datensatz beim Ermitteln der Höhe zu berücksichtigen.

In einer weiteren Ausführungsform des erfindungsgemässen Vermessungsgerätes ist das Höhenmesssystem zum Ausführen einer Höhenmessfunktionalität ausgestaltet, im Rahmen derer das Laserlot den Laserstrahl entlang der Stehachse auf den Bodenpunkt aussendet, der Zeilensensor die diffuse Rückstreuung des Laserstrahls aus einer Vielzahl verschiedener Positionen erfasst, und die Höhe des Vermessungsgerätes über dem Bodenpunkt basierend auf den Positionen der diffusen Rückstreuung auf dem Zeilensensor in der Vielzahl verschiedener Positionen ermittelt wird. Zum Einnehmen der Vielzahl verschiedener Positionen durch den Zeilensensor erfolgt dabei beispielsweise eine motorisierte Drehung der Stütze gegenüber der Basis um die Stehachse.

In einer Ausführungsform des erfindungsgemässen Vermessungsgerätes weist die Erfassungseinheit zur Verringerung unerwünschter Reflexionen eine Schlitzblende und/oder einen Filter auf, insbesondere einen Polarisationsfilter oder einen wellenlängenabhängigen Interferenzfilter.

Der Zeilensensor des erfindungsgemässen Vermessungsgerätes weist insbesondere eine Vielzahl von in einer einzigen Reihe angeordneten lichtempfindlichen Elementen auf, z. B. CCD- oder CMOS-Sensoren oder Photodioden.

Ein weiterer Aspekt der vorliegenden Erfindung betrifft ein Verfahren zum Messen einer Höhe eines zur Positionsbestimmung eines Zielpunkts ausgestalteten Vermessungsgerätes über dem Boden mittels Triangulation. Das Vermessungsgerät kann dabei insbesondere ein oben beschriebenes erfindungsgemässes Vermessungsgerät sein. Erfindungsgemäss weist das Verfahren die folgenden Schritte auf:
- Positionieren eines Zeilensensors an dem Vermessungsgerät in bekannter Entfernung zu einer Stehachse des Vermessungsgerätes,
- Aussenden eines Laserstrahls entlang der Stehachse auf einen Bodenpunkt,
- Erfassen einer diffusen Rückstreuung des Laserstrahls von dem Bodenpunkt durch den Zeilensensor, und
- Ermitteln der Höhe basierend auf einer Position der diffusen Rückstreuung auf dem Zeilensensor und der bekannten Entfernung.

Und dabei den Schritt:
- Projizieren einer linienförmigen Lasermarkierung auf den Boden, mit einem eine Linienlasereinheit aufweisenden Höhenmesssystem des Vermessungsgerätes, wobei das Erfassen der diffusen Rückstreuung des Laserstrahls mit einem linienförmigen Sichtfeld durch eine Erfassungseinheit des Höhenmesssystems erfolgt, und wobei der Zeilensensor ausgestaltet ist, die linienförmige Lasermarkierung zumindest teilweise zu erfassen, wobei das Höhenmesssystem dazu ausgestaltet ist, basierend auf der erfassten linienförmigen Lasermarkierung auf dem Boden ein Intensitätsprofil abzuleiten, darauf basierend eine Grösse, relative Position oder Art eines auf dem Boden befindlichen normierten Bodenziels zu erkennen.

In einer Ausführungsform weist das erfindungsgemässe Verfahren zusätzlich die folgenden Schritte auf:
- Bereitstellen von Datensätzen bekannter Bodenziele, z. B. Vermarkungspunkten, oder Hilfsbodenziele, wobei die Datensätze mindestens Daten über eine räumliche Ausdehnung des jeweiligen Bodenziels bzw. Hilfsbodenziels aufweisen,
- Erfassen eines Bodenbildes mittels einer Kamera, und
- Erkennen von bekannten Bodenzielen und/oder Hilfsbodenzielen in dem Bodenbild mittels Bilderkennung, wobei beim Ermitteln der Höhe der entsprechende Datensatz berücksichtigt wird.

In einer Ausführungsform des erfindungsgemässen Verfahrens erfolgt das Erfassen der diffusen Rückstreuung des Laserstrahls durch den Zeilensensor aus einer Vielzahl verschiedener Positionen des Zeilensensors, und die Höhe wird basierend auf den Positionen der diffusen Rückstreuung auf dem Zeilensensor in der Vielzahl verschiedener Positionen ermittelt. Zum Einnehmen der Vielzahl verschiedener Positionen durch den Zeilensensor kann beispielsweise ein diesen aufweisender Teil des Vermessungsgerätes um die Stehachse gedreht werden, insbesondere motorisiert und um 360°.

In einer weiteren Ausführungsform des erfindungsgemässen Verfahrens wird zur Bestimmung eines Abstandes bzw. einer dreidimensionalen Ablage eines Ursprungs eines lokalen Koordinatensystems des Vermessungsgerätes zu einem auf dem Boden befindlichen normierten Bodenziel, z. B. einem Grenzstein oder einem Vermarkungspunkt, ein den Zeilensensor und eine Linienlasereinheit aufweisender Teil des Vermessungsgerätes um mindestens 180°, insbesondere um mindestens 270° bis 360°, um die Stehachse gedreht (motorisiert oder von Hand durch den Benutzer), wobei
- die Linienlasereinheit eine linienförmige Lasermarkierung auf den Boden projiziert,
- der Zeilensensor mit hoher Messfrequenz aus einer Vielzahl verschiedener Winkel-Positionen die diffuse Rückstreuung der linienförmigen Lasermarkierung erfasst,
- basierend auf den erfassten diffusen Rückstreuungen der linienförmigen Lasermarkierung eine Vielzahl von Intensitätsprofilen abgeleitet wird,
- basierend auf der Vielzahl von Intensitätsprofilen eine Position (und ggf. eine Grösse oder Art) des Bodenziels abgeleitet wird, und
- basierend auf der Vielzahl von Intensitätsprofilen ein Verschiebungsvektor zwischen dem mit dem Bodenziel verbundenen Koordinatensystem und dem Vermessungsgerät verbundenen Koordinatensystem abgeleitet wird.

Gemäss einer weiteren Ausführungsform werden entweder Koordinaten eines lokalen Koordinatensystems des Vermessungsgerätes in Koordinaten eines externen Koordinatensystems transformiert, oder Koordinaten des externen Koordinatensystems in Koordinaten des lokalen Koordinatensystems. Der Ursprung des lokalen Koordinatensystems ist dabei beispielsweise ein Schnittpunkt einer Stehachse und einer Querachse des Vermessungsgerätes. Insbesondere weist der Bodenpunkt bekannte Koordinaten in dem externen Koordinatensystem auf, und Koordinaten des Zielpunktes in dem externen Koordinatensystem werden ermittelt.

Das erfindungsgemässe Vermessungsgerät, das erfindungsgemässe Höhenmesssystem und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-b: eine Totalstation als Beispiel für ein erfindungsgemässes geodätisches Vermessungsgerät;
- Fig. 2a-b: ein Vermessungsgerät mit zwei beispielhaften Ausführungsformen einer erfindungsgemässen Höhenmessfunktionalität;
- Fig. 3: ein erfindungsgemässes Höhenmesssystem;
- Fig. 4: eine Erfassungseinheit des Höhenmesssystems;
- Fig. 5a-b: einen beispielhaften Vermarkungspunkt;
- Fig. 6: ein Intensitätsprofil des Vermarkungspunkts der Figuren 5a und 5b;

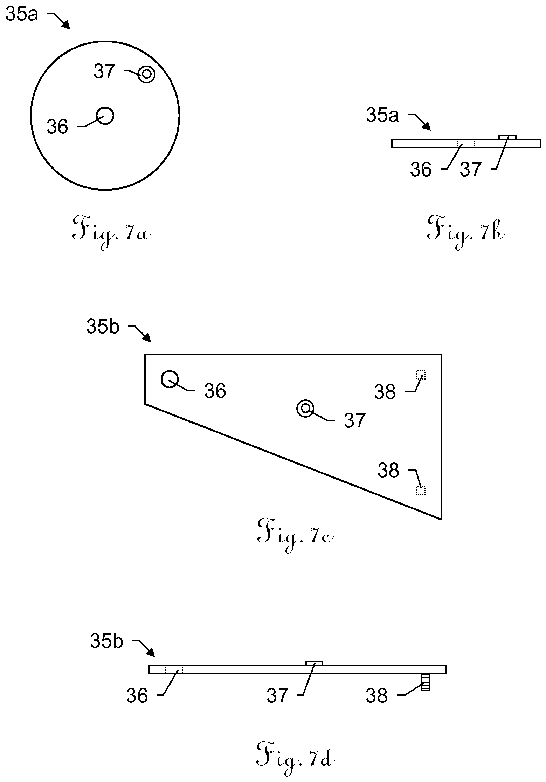

- Fig. 7a-d: zwei beispielhafte Ausführungsformen eines Ablage-Bodenziels; und
- Fig. 8a-b: ein Ermitteln eines Abstands zwischen der Stehachse des Vermessungsgerätes und einem Vermarkungspunkt.

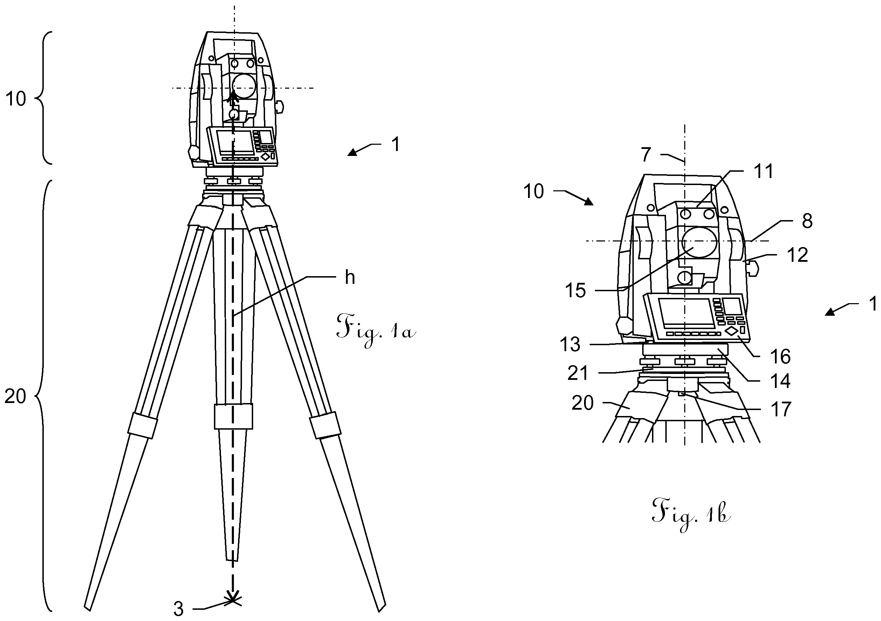

In den Figuren 1a und 1b ist eine Totalstation 1 als Beispiel für ein erfindungsgemässes geodätisches Vermessungsgerät dargestellt. Der Hauptkörper der Totalstation 1, der auch als Oberteil 10 bezeichnet wird, ist auf einem Stativ 20 angeordnet und - wie in Figur 1a gezeigt - in einer Höhe h über einem Bodenpunkt 3 angeordnet. Die Höhe h bezeichnet dabei den Abstand des lokalen Koordinatensystems über dem zu vermessenden Bodenpunkt. Als Ursprung dieses Koordinatensystems wird in der Regel der Schnittpunkt der Kippachse und der Stehachse des Vermessungsgerätes angenommen. Von diesem Ursprungspunkt aus wird die Höhe h über dem Boden berechnet.

Wie in Figur 1b dargestellt, ist eine Basis 13 der Totalstation 1 direkt und fest mit dem Stativ 20 verbunden. Das Oberteil 10 ist relativ zu der Basis 13 um eine vertikale Stehachse 7 drehbar. Das Oberteil 10 weist dabei eine - in diesem beispielhaften Aufbau durch zwei Säulen gebildete - Stütze 12, eine zwischen den Säulen um eine horizontale Kippachse 8 drehbar gelagerte Visiereinrichtung 11, z. B. ein Teleskop, sowie eine elektronische Anzeige-Steuereinheit 16 auf. Die Anzeige-Steuereinheit 16 kann in bekannter Weise zur Steuerung der Totalstation 1 sowie zur Verarbeitung, Anzeige und Speicherung von Messdaten ausgebildet sein.

Die Visiereinrichtung 11 ist an der Stütze 12 um eine horizontale Kippachse 8 drehbar angeordnet und kann somit zur Ausrichtung auf ein Zielobjekt relativ zur Basis 13 horizontal und vertikal geschwenkt bzw. gekippt werden. Zur Ausführung nötiger Schwenk- und Kippbewegungen für die Ausrichtung der Visiereinrichtung 11 sind (hier nicht dargestellte) Motoren vorhanden. Die Visiereinrichtung 11 kann als eine gemeinsame Visiereinrichtungs-Baueinheit ausgeführt sein, wobei ein Objektiv, eine Fokussieroptik, ein koaxialer Kamerasensor, das Okular 15 sowie ein Grafikprozessor in einem gemeinsamen Visiereinrichtungs-Gehäuse integriert sein können. Mittels der Visiereinrichtung 11 kann das Zielobjekt angezielt und die Entfernung von der Totalstation 1 zu dem Zielobjekt elektrosensorisch erfasst werden. Weiters sind Mittel zum elektrosensorischen Erfassen der Winkelausrichtung des Oberteils 10 relativ zur Basis 13 und der Visiereinrichtung 11 relativ zur Stütze 12 vorgesehen. Diese elektrosensorisch erfassten Messdaten werden der Anzeige-Steuereinheit 16 zugeführt und von dieser verarbeitet, so dass die Position des Zielpunkts relativ zur Totalstation 1 durch die Anzeige-Steuereinheit 16 ermittelbar, optisch anzeigbar und speicherbar ist.

Das Vermessungsgerät 1 steht typischerweise auf einem Dreibein-Stativ 20 und wird mittels Dreifuss 14 und Stativschraube 17 auf dem Stativteller 21 fixiert, zum Bodenpunkt 3 zentriert und festgeschraubt.

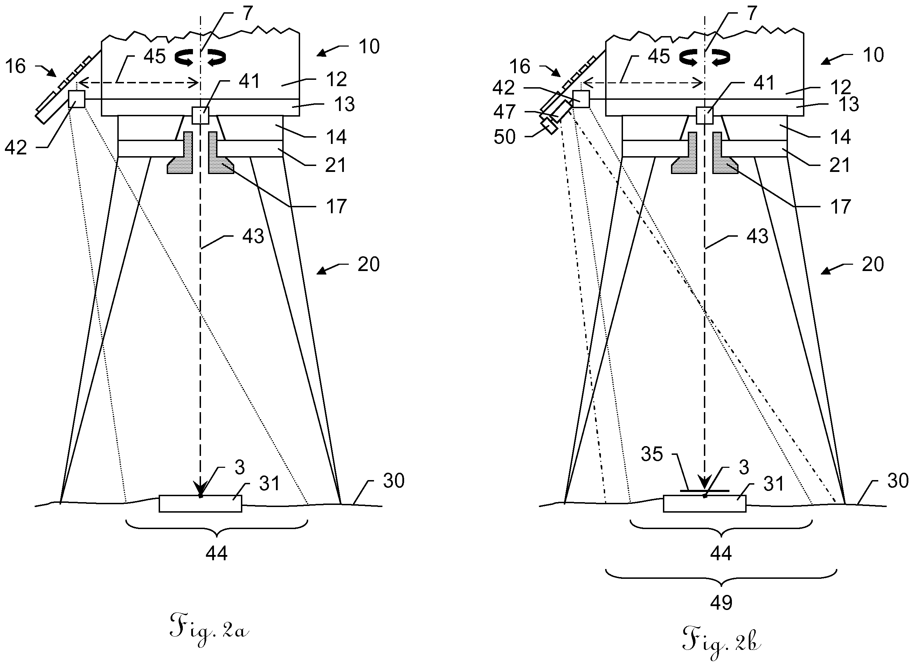

Figur 2a zeigt ein geodätisches Vermessungsgerät 1 mit einer beispielhaften Ausführungsform eines Höhenmesssystems zur Ausführung einer Höhenmessfunktionalität. Das Vermessungsgerät 1 ist über einem Bodenziel 31 (z. B. einem Vermarkungspunkt als Teil eines Grenzsteins) aufgestellt, der in den Boden 30 eingelassen ist.

Ein im Vermessungsgerät 1 vorgesehenes Laserlot 41 projiziert in Verlängerung der Rotationsachse 7 durch die hohle Stativschraube 17 einen Laserpunkt auf den Boden 30 (Bodenpunkt 3). Eine Erfassungseinheit 42 des Vermessungsgerätes ist dazu ausgestaltet in einem Sichtfeld 44 den Laserpunkt zu erfassen.

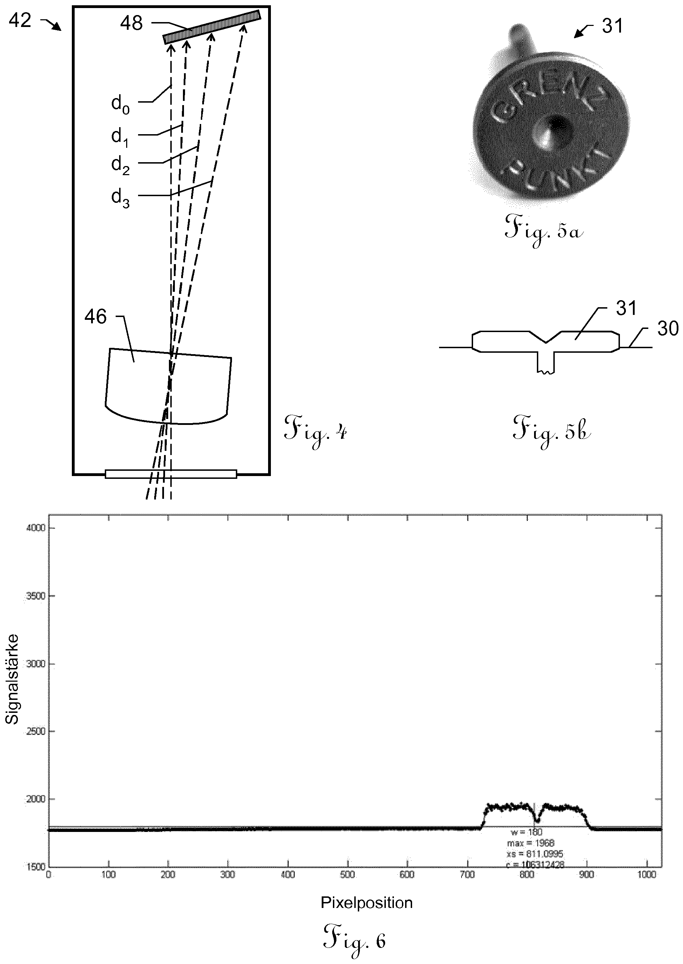

Die Erfassungseinheit 42 weist eine Linse und einen Zeilensensor auf (siehe Figur 4). Der Laserpunkt wird über die Linse, die im abgebildeten Vermessungsgerät 1 exzentrisch neben der Anzeige-Steuereinheit 16 angebracht ist, auf den Zeilensensor scharf abgebildet. Insbesondere ist die Erfassungseinheit 42 derart gestaltet, dass die Scheimpflug-Bedingung eingehalten wird.

Dabei ist die Stelle des Zeilensensors, an der der Laserpunkt abgebildet wird, abhängig von der Höhe des Vermessungsgerätes 1 über dem Boden 30. Da die Basislänge 45 zwischen Laserlot 41 und Empfänger 42 bekannt ist, kann mittels Triangulation die Höhe h zum Bodenpunkt 3 berechnet werden.

Über die Kalibrierkurve, die bei der Montage des Gerätes im Werk einmal bestimmt wird, kann aus der Pixelposition die Höhe h berechnet werden.

Die Erfassungseinheit 42 muss an der Basis 13, dem Dreifuss (hier nicht dargestellt) und dem Stativteller 21 vorbei den Bodenpunkt 3 sehen können. So ergibt sich unter der Bedingung, dass die Erfassungseinheit 42 nicht weiter aus dem Gerät herausragt als die Tastatur, und dass der Strahlengang der Erfassungseinheit 42 den Stativteller 21 nicht tangiert, eine minimale Messhöhe von etwa einem halben Meter.

Die Erfassungseinheit 42 kann beispielsweise direkt an der Stütze, in der Rückwand der Anzeige-Steuereinheit 16 oder im Seitendeckel montiert werden.

Da die Erfassungseinheit 42 ein Absolutdistanzmesser ist, der über einen grossen Temperaturbereich verwendbar sein sollte, ist sie optisch stabil zum Laserlot 41 in einer bekannten Distanz 45 angeordnet.

Figur 2b zeigt das Vermessungsgerät 1 aus Figur 2a, wobei das Höhenmesssystem zusätzlich einen Linienlaser 47 und eine Bodenkamera 50 aufweist. Der Linienlaser ist dazu ausgestaltet eine linienförmige Bodenmarkierung 49 auf den Boden 30 unter dem Vermessungsgerät 1 zu projizieren, die durch den Zeilensensor der Erfassungseinheit 42 und/oder die Bodenkamera 50 erfassbar ist. Ebenfalls dargestellt ist ein Hilfsbodenziel 35 in Form einer Scheibe, die über den Bodenpunkt 3 gelegt wird (siehe Erläuterungen zu den Figuren 6a-d).

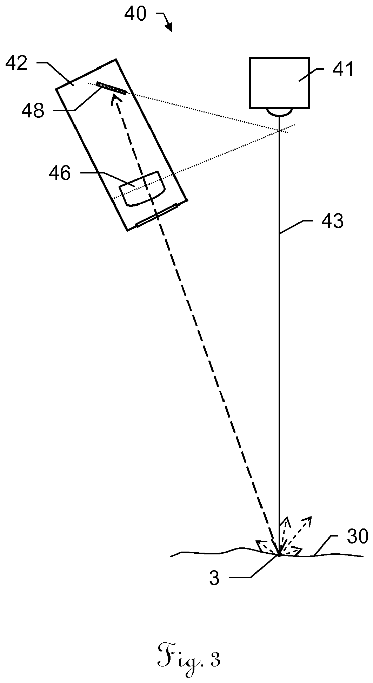

Figur 3 zeigt schematisch den Aufbau eines Höhenmesssystems 40 zur Verwendung in einem geodätischen Vermessungsgerät (hier nicht gezeigt) zur Messung dessen Höhe über dem Boden 30. Das Laserlot 41 und die Erfassungseinheit 42 sind in bekannter, fester räumlicher Beziehung zueinander angeordnet. In der Erfassungseinheit sind eine Linse 46 und ein Zeilensensor 48 angeordnet. Der Zeilensensor 48 ist beispielsweise als linienförmiger CCD-Sensor (CCD = Charge-coupled Device) ausgestaltet und weist eine Vielzahl von in einer einzigen Reihe angeordneten lichtempfindlichen Elementen auf. Insbesondere kann so ein Bild mit einer einzigen Reihe von Pixeln aufgenommen werden.

Das dargestellte Höhenmesssystem 40 erfüllt die Scheimpflug-Bedingung, d. h. der Bodenpunkt 3 wird stets mit maximaler Schärfe auf dem Zeilensensor 48 abgebildet.

Das Laserlot 41 emittiert einen Laserstrahl 43 (bzw. einen Lichtstrahl) auf den Bodenpunkt 3. Diffuse Rückstreuungen des Laserstrahls 43 gelangen durch eine Öffnung der Erfassungseinheit 42 und werden dort durch die Linse 46 auf den Zeilensensor 48 geleitet. Anhand des oder der beleuchteten Pixel kann dann mittels Triangulation eine Höhe einer Basis über dem Bodenpunkt 3 ermittelt werden.

Figur 4 zeigt einen beispielhaften Aufbau einer Erfassungseinheit 42. Diese weist einen Zeilensensor 48 und eine diesem vorgelagerte Empfängerlinse 46 auf. Dargestellt sind diffuse Rückstreuungen des Lasersignals 43 des Laserlots vom Bodenpunkt 3, die vier verschiedenen Distanzen zum Bodenpunkt 3 entsprechen. Dabei entspricht die ganz links aussen auf dem Zeilensensor 48 auftreffende Rückstreuung d₀ einer unendlich grossen Distanz. Die Rückstreuung d₁ rechts daneben entspricht einer Distanz von fünf Metern, die nächste Rückstreuung d₂ einer Distanz von einem Meter und die Rückstreuung d₃ ganz rechts einer Distanz von einem halben Meter.

Die Erfassungseinheit 42 ist zusammen mit dem Laserlot (hier nicht dargestellt) nach dem bekannten Grundprinzip eines Triangulations-Entfernungsmessers aufgebaut. Der Zeilensensor 48 ist vorzugsweise so zum Laserlot ausgerichtet, dass die Scheimpflugbedingung erfüllt ist, d. h. die diffusen Rückstreuungen unabhängig von ihrer Entfernung scharf auf dem Zeilensensor 48 abgebildet werden.

Der Durchmesser der Empfängerlinse 46 wird vorzugsweise etwa drei- bis fünfmal grösser als das zu messende Bild gewählt, um den Fehler durch Speckles möglichst gering zu halten.

Der Zeilensensor 48 hat wegen seiner Einfachheit, der hohen Abtastrate und des günstigen Preises grosse Vorteile gegenüber einer Flächenkamera. So können Bilder im Kilohertz-Bereich aufgenommen und aufgrund der geringen Datenmenge in Echtzeit und mit einfachster Elektronikhardware verarbeitet werden.

Die Scheimpflug-Bedingung wird dabei erfüllt, wenn sich die Objektebene, die Bildebene und die Objektivhauptebene in einer gemeinsamen Linie bzw. Geraden schneiden. D. h., falls sich die Objektivhauptebene, die Bildebene und die Objektebene, welche die Ausrichtungsachse umfasst, in einer gemeinsamen Schnittlinie schneiden, kann die gewünschte scharfe Abbildung der sich in der Objektebene befindenden Objekte ohne Verstellungsaufwand während der Messung entfernungsunabhängig gewährleistet werden.

Da durch das System vorzugsweise Abstände zwischen einem halben und fünf Metern messbar sein sollten, kann bei einer Scheimpflug-Anordnung mit einem Fixfokussystem gearbeitet werden, was das System wesentlich vereinfacht und auf jeder Distanz ein scharfes Bild abgebildet wird, d. h. die Signalstärke maximiert ist.

Da die Triangulation eine absolute Messmethode ist, ist in der Regel eine einzige Messung ausreichend. Wegen der Abschattung durch die Stativbeine in bestimmten Winkelsegmenten oder wenn der Vermesser den Dreifuss über den Stativteller hinausragend montiert, kann der Empfänger an bestimmten Stellen den Laserpunkt am Boden nicht sehen. Um die dadurch möglichen Abschattungen durch Stativteller oder -beine zu minimieren, und eine gute Standardabweichung zu erreichen, d. h. möglichst viele Messpunkte zu erhalten, kann der Vermesser in diesem Fall vorzugsweise aufgefordert werden, eine 360°-Drehung des Gerätes auszuführen. Alternativ zu einer manuellen Drehung kann diese Drehung auch motorisiert und automatisch erfolgen.

Durch diese Drehung des Gerätes um die eigene Achse, die dem Laserlot entspricht, werden viele unabhängige, mit dem Winkelsensor referenzierte, Messungen aufgenommen. Ganz oder teilweise abgeschattete Punkte können dabei verworfen werden. Wenn der Winkelmesser meldet, dass die 360°-Drehung vollendet ist und genügend unabhängige Einzelmessungen vorhanden sind, wird über alle Punkte gemittelt und daraus die Höhe berechnet. Die Standardabweichung der Einzelmessungen kann dem Vermesser angezeigt werden und ergibt ein klares Indiz für die Qualität des Messwertes, was meist auch die Qualität des Bodenpunktes (Rauhheit, Geometrie, Topologie, Pflanzen) beschreibt.

Wenn die Erfassungseinheit 42 - wie in den Figuren 2a-b gezeigt - in der Unterseite der Anzeige-Steuereinheit 16 angeordnet ist, kann unter Berücksichtigung der elektronischen Schnittstellen grundsätzlich jeder Theodolit nachgerüstet werden.

In Figur 5a ist ein beispielhaftes Bodenziel in Form eines Vermarkungspunkts 31 ("Grenzpunkt") gezeigt. Figur 5b zeigt den in den Boden 30 eingelassenen Vermarkungspunkt 31 in einem Querschnitt. Das Aussehen der Vermarkungspunkte ist von Land zu Land verschieden und teilweise genormt. Wie bei dem hier dargestellten, haben viele haben genau im Zentrum, dem Messpunkt, eine V-förmige Vertiefung, die als Führung für eine Lotstock-Spitze dient. Wenn der Theodolit genau über dem Vermarkungspunkt 31 ausgerichtet ist, zielt das Laserlot also genau in den Konus.

Dabei ist es hilfreich, wenn die Art des Vermarkungspunkts, auf den gemessen werden soll, bekannt ist. Ein Erkennen der Art des Vermarkungspunkts kann beispielsweise mittels einer nach unten gerichteten Kamera erfolgen (wie in Figur 2b gezeigt), die mittels Bilderkennung landestypische Vermarkungspunkte erkennt, die zuvor in einem Speicher hinterlegt wurden. Gleichzeitig wird der Bodenpunkt über einen externen Beleuchtungslinienlaser (wie in Figur 2b gezeigt) oder mit einer Linie, die beispielsweise durch eine Zylinderlinse oder ein DOE-Element im Laserlot generiert wird, beleuchtet, so dass über den Linienempfänger ein Helligkeits- oder Intensitätsprofil erzeugt wird, aus dem die Geometrie des Vermarkungspunktes 31 abgeleitet werden kann. Ein solches Intensitätsprofil ist in Figur 6 dargestellt.

Die Oberfläche der Vermarkungspunkte hat in der Regel eine dreidimensionale Ausdehnung. Dies kann wie im hier gewählten Beispiel eine konische Vertiefung in der Mitte sein, aber z. B. auch eine Bombierung. Somit kann die gemessene Höhe im einstelligen Millimeterbereich abweichen, je nachdem an welcher Stelle des Vermarkungspunktes 31 gemessen wird.

Mittels eines Linienbeleuchters (z. B. ein Linienlaser mit gleicher Wellenlänge wie das Laserlot) oder einer Linie, die durch ein DOE-Element im Laserlot generiert wird, wird der Bodenpunkt beleuchtet. Der Linienbeleuchtungslaser wird ebenfalls auf den Triangulationsempfänger justiert.

Der Zeilensensor erkennt die Linie auf dem Boden. Auf dem Pixel, auf dem das Bild des Laserlotes (entsprechend der Kalibrierkurve) scharf abgebildet ist, liegt die Höheninformation. Links und rechts auf dem Sensor wird das Bild nach klaren Regeln leicht unschärfer. Da die Vermarkungspunkte sehr kleine Durchmesser haben (einige cm), ist diese Unschärfe zu vernachlässigen.

Von den Seitenrändern und der konischen Vertiefung des Vermarkungspunktes kommt wesentlich weniger Licht zurück als von der geraden Oberfläche. Somit bildet die Helligkeit bzw. die Intensität der diffusen Rückstreuung die räumliche Geometrie des Vermarkungspunktes auf dem Sensor ab.

Über eine Drehung um 360° werden genügend Bilder aufgenommen, um ein räumliches Helligkeits-Bild zu erzeugen. Das aufgenommene Bild wird dann mit dem Bild der Kamera und dem Bild in einer Datenbank verglichen. Da nun der Auftreffpunkt des Laserlotes auf dem Vermarkungspunkt bekannt ist, kann der Messwert entsprechend korrigiert werden.

Die Messung kann beispielsweise wie folgt ablaufen: Das Stativ wird möglichst zentrisch über dem Bodenpunkt aufgestellt und der Stativteller von Auge grob horizontiert. Der Theodolit wird mittels Dreifuss auf dem Stativteller leicht angeschraubt, eingeschaltet und mittels Dosenlibelle horizontiert. Der so horizontierte Theodolit wird auf dem Stativteller geschoben und mit Hilfe des Laserlots zum Bodenpunkt ausgerichtet. Die Horizontierung wird überprüft und evtl. iterativ die Ausrichtung nachjustiert, bis Horizontierung und Ausrichtung über dem Bodenpunkt stimmen. Dann wird das Instrument festgeschraubt.

Die Messung wird ausgelöst, und der Theodolit währenddessen um 360° gedreht. Eine Drehung von Hand dauert etwa zwei Sekunden; somit werden bei 1 kHz ca. 1000 brauchbare Messungen aufgenommen (z. B. 500 vom Laserlot und 500 vom Linienbeleuchter). Eine optionale automatische Drehung kann in einer entsprechenden Geschwindigkeit durchgeführt werden.

Die Bodenkamera macht einige Bilder, vergleicht das Bodenziel (z. B. Vermarkungspunkt) mit denen in einer abgelegten Liste und leitet die Geometriedaten des erkannten Bodenzieles an den Algorithmus weiter. Der Linienbeleuchtungslaser (oder die durch ein DOE-Element im Laserlot generierte Linie) beleuchtet das Bodenziel. Der Empfänger nimmt das Intensitäts- bzw. Helligkeitsprofil des Bodenziels auf. Das Laserlot beleuchtet das Bodenziel. Der Empfänger nimmt das stehende Bild vom Laserlotpunkt auf. Ausreisser-Reflexe werden teilweise in Echtzeit korrigiert. Wenn alle Messungen abgeschlossen sind, wird die gemessene Höhe mit dem Profil verrechnet, und auf dem Display erscheint die Instrumentenhöhe mit der dazugehörenden Standardabweichung.

Da Vermarkungspunkte 31 meist metallisch und daherzumindest im Neuzustand - glänzend sind, kann das Laserlot-Licht weggespiegelt werden, sodass es zum Grossteil nicht auf den Empfänger trifft. Nur das nicht-polarisierte Restsignal, das diffus vom Vermarkungspunkt abstrahlt und vom Empfänger detektiert wird, trägt die richtige Lageinformation. Das meiste Licht aber, das auf den Empfänger trifft, stammt von störenden Reflexen. Diese müssen von der Software erkannt und weggerechnet werden.

Weitere Massnahmen zur Fehlerreduzierung durch glänzende Ziele sind insbesondere die folgenden:
Optional kann der glänzende Bodenpunkt mit einer matten Farbe (z. B. einem Spray) beschichtet werden.

Optional können die Reflexe auch durch die Auswertung herausgefiltert werden. Dadurch, dass vom Laserbild durch Spiegelung am Glanzwinkel des Vermarkungspunkts ein Anteil von bis zu 90% weggespiegelt wird, kommt nur der Lambert-Anteil mit der richtigen Lageinformation auf dem Zeilensensor an. Ein Teil des gespiegelten Lichtes trifft auf den Zeilensensor und verfälscht dadurch die Messung. Da sich das Laserlot mit dem Empfänger dreht, ändern die Spiegelungen sehr schnell. Der Lambert-Anteil aber bleibt auf dem Zeilensensor auf denselben Pixeln stehen. Aus den vielen Bildern kann nun der hochfrequente Anteil herausgefiltert werden, so dass nur der niederfrequente Anteil zählt. Der Punkt, der über die gesamten 360° stehen bleibt, ist der richtige.

Ebenso können je nach Bildfehlern verschiedene Auswertemethoden auf die Pixelbilder (z. B. Schwerpunktsmethode) angewendet werden und miteinander verglichen werden.

Vor dem Empfänger kann optional ein Polarisationsfilter angeordnet sein. Da der Laser polarisiert ist, können damit Reflexe, die durch einfache Spiegelung erzeugt wurden, herausgefiltert werden. Der Polarisationsfilter muss zum Laser ausgerichtet werden.

Ein optionaler Interferenzfilter hilft, das Umgebungslicht (z. B. Sonnenlicht) zu reduzieren.

Eine optionale Schlitzblende vor dem Empfänger reduziert falsches Licht auf den Zeilensensor
Optional kann ein Vergleich von Hell- und Dunkelbild erfolgen mit einem abwechselnden Ein- und Ausschalten der Laserlichtquelle. Dazu muss das Laserlot bzw. der Linienbeleuchtungslaser mit dem Empfänger synchronisiert werden. Die Reflexionen, die durch das Laserlot über den Vermarkungspunkt entstehen, können so zwar nicht reduziert werden, aber alle Reflexe durch Umgebungslicht.

Während einer Drehung des Instrumentes um die Stehachse können die Differenzbilder mit einer Rate von beispielsweise 1 kHz aufgenommen werden, wobei Laserlot und Linienlaser alternierend synchronisiert sind.

Alternativ kann die Laserleistung durch kurze Pulse erhöht werden, damit der Lambert-Anteil auf dem metallisch glänzenden Vermarkungspunkt höher wird (je spiegelnder die Oberfläche, desto geringer die diffuse Rückstreuung). Die Reflexe werden damit natürlich auch stärker. Das gleiche gilt auch für eine Linie, die durch ein DOE-Element im Laserlot generiert wird.

Die Figuren 6a-d zeigen zwei beispielhafte Hilfsbodenziele 35a,b zur Verwendung mit einer Ausführungsform der erfindungsgemässen Erfassungseinheit.

Da Bodenziele wie Vermarkungspunkt verschiedene Formen, Farben und Oberflächenbeschaffenheiten aufweisen kann, wird in einer Ausführungsform ein Hilfsbodenziel 35a,b über den zu messenden Vermarkungspunkt gelegt (siehe Figur 3b). Dies kann beispielsweise eine dünne Platte mit definierter Dicke und definierter Oberflächenbeschaffenheit sein. Die bekannte Dicke der Platte wird dann zum Messergebnis addiert. Bei Verwendung eines solchen Hilfsbodenziels 35a,b, kann man davon ausgehen, dass der Empfänger einen Punkt vermisst, der sich im wesentlichen wie ein Lambert-Strahler verhält. Spiegelungen und Oberflächenfehler des eigentlichen Vermarkungspunkts sind somit eliminiert. Sollte das Hilfsbodenziel 35a,b verschmutzt sein (Staub, Wassertropfen etc.), erkennt das der Benutzer sofort an der vergrösserten Standardabweichung.

Das Hilfsbodenziel 35a,b wird waagerecht auf dem Bodenpunkt plaziert. Wenn der Bodenpunkt kugelförmig ist, kann eine Stabilisierung des Hilfsbodenziels über die Messzeit beispielsweise durch eine Klebefläche auf seiner Unterseite erreicht werden.

Das Hilfsbodenziel sollte gross genug gestaltet sein, dass in direkter Nähe des Laserpunktes (bzw. dem Sichtfeld 44 der Erfassungseinheit) keine Reflexe oder Fehlbilder vorhanden sind. Es kann aber nicht verhindert werden, dass z. B. die Sonne auf einen starkreflektierenden Punkt strahlt, der wiederum in den Empfänger trifft. Durch Messen aus verschiedenen Richtungen, können solche Fehlmessungen entdeckt und verworfen werden. Hier hat der Zeilenarray einen grossen Vorteil gegenüber einem PSD: Bei der Zeile kann mit einem Ausschnitt gearbeitet werden, bei dem Reflexe am Rand nicht ausgewertet werden.

Weitere Optimierungsmöglichkeiten, um Spiegelungen bzw. Reflexe (z. B. um den Bodenpunkt oder am Stativ) zu minimieren, die die Genauigkeit der Punktauswertung auf dem Zeilensensor reduzieren, umfassen unter anderem eine Schlitzblende vor dem Empfänger um "falsches" Licht auf den Zeilensensor zu verringern, einen Interferenzfilter, um das Umgebungslicht zu reduzieren, oder einen Hell-Dunkelbild-Vergleich, wofür der Laser mit dem Empfänger synchronisiert sein muss.

In einer ersten beispielhaften Ausführungsform, die in Figur 6a von oben und in Figur 6b in seiner Seitenansicht gezeigt ist, ist das Hilfsbodenziel ein Ablage-Bodenziel 35a in Form einer runden Scheibe mit ca. 25cm Durchmesser und weist eine Libelle 37 auf. Das Ablage-Bodenziel 35a wird ausbalanciert, waagrecht auf dem Bodenpunkt gelegt und mit Hilfe der zentrischen Bohrung 36 mechanisch zum Bodenpunkt zentriert.

Eine weitere beispielhafte Ausführungsform ist ein viereckiges Ablage-Bodenziel 35b, das mit einer seitlich versetzten Bohrung 36 einseitig auf dem Bodenpunkt aufliegt und optional durch zwei höhenverstellbare Füsse 38 horizontierbar ist.

Vorteilhaft ist das Hilfsbodenziel zur Verwendung mit einem bestimmten Vermarkungspunkt optimiert. Für jedes Land kann es so als ein spezielles Ablage-Bodenziel 35a,b für die typischen Bodenpunkte bereitgestellt sein. Dieses muss so lange stabil sein, bis dass Vermessungsinstrument ausgerichtet ist (zwischen den Stativbeinen ist es vor Berührungen geschützt).

Im folgenden wird ein beispielhafter Messablauf bei Verwendung eines Hilfsbodenziels beschrieben:
Das Stativ wird möglichst zentrisch über dem Bodenpunkt aufgestellt und der Stativteller von Auge grob horizontiert. Der Theodolit wird mittels Dreifuss auf dem Stativteller leicht angeschraubt, eingeschaltet und mittels Dosenlibelle horizontiert. Der so horizontierte Theodolit wird auf dem Stativteller geschoben und mit Hilfe des Laserlots zum Bodenpunkt ausgerichtet. Die Horizontierung wird überprüft und evtl. iterativ die Ausrichtung nachjustiert, bis Horizontierung und Ausrichtung über dem Bodenpunkt stimmen. Dann wird das Instrument festgeschraubt.

Ein Hilfsbodenziel wird waagerecht auf den Bodenpunkt gelegt. Die Messung wird ausgelöst und der Theodolit dabei um bis zu 360° gedreht. Auf dem Display erscheint dann die Instrumentenhöhe mit der dazugehörenden Standardabweichung.

Bei einer Messung ohne Hilfsbodenziel, d. h. auf den Boden selbst, ist der Messablauf im wesentlichen gleich. Durch die grössere Streuung aufgrund der natürlichen Bodenbeschaffenheit erhöht sich automatisch die Standardabweichung der Einzelmessungen. Durch die Streuung erhält der Benutzer ein direktes Mass für die Qualität des Bodenpunktes und der der Messung (Rauhheit, Geometrie, Topologie, Pflanzen, Bedienerfehler).

Ein Ablage-Bodenziel 35a,b kann vorteilhaft auch zur Ablagemessung verwendet werden, d. h. für eine automatische Bestimmung der Zentrierung des Theodolits über dem Bodenpunkt.

Bei der 360°-Drehung des Theodolits wird über den Laserpunkt und den Linienempfänger mittels Triangulation die Höhe bestimmt. Gleichzeitig wird das Ablage-Bodenziel mit dem Linienbeleuchtungslaser, oder einer Linie, die durch ein DOE-Element im Laserlot generiert wird. beleuchtet. Die beleuchtete Linie dreht über das Ablage-Bodenziel und überstreicht zweimal die Zentrieröffnung über dem Bodenpunkt. Über die Helligkeitsdifferenz der Kanten der Zentrierbohrung im Ablage-Bodenziel kann die Lage der beiden Kanten auf dem Zeilensensor detektiert werden. Somit ist auf dem Zeilenarray immer das Bild des Laserlots sichtbar und zweimal die die Kanten der Zentrierbohrung des Ablage-Bodenziels.

Bei der Auswertung muss deshalb zwischen einem hellen Laserpunkt und einem Helligkeits- oder Intensitätsprofil der Bohrung unterschieden werden können. Durch Ein- und Ausschalten des Linienbeleuchtungslasers oder des Laserlotes kann die eine oder andere Auswertung vorgenommen werden und/oder überprüft werden.

Für wiederkehrende Kontrollmessungen über bekannten Bodenpunkten (z. B. bei Tunneln, Strassen etc.) ist eine Automatisierung und Vereinfachung des Aufstell- und Einrichtprozesses wünschenswert. Die Bodenkamera erkennt den Bodenpunkt und vergleicht ihn mit abgelegten Daten in einer gespeicherten Liste. Weiter hilft die Bodenkamera bei der Dokumentation.

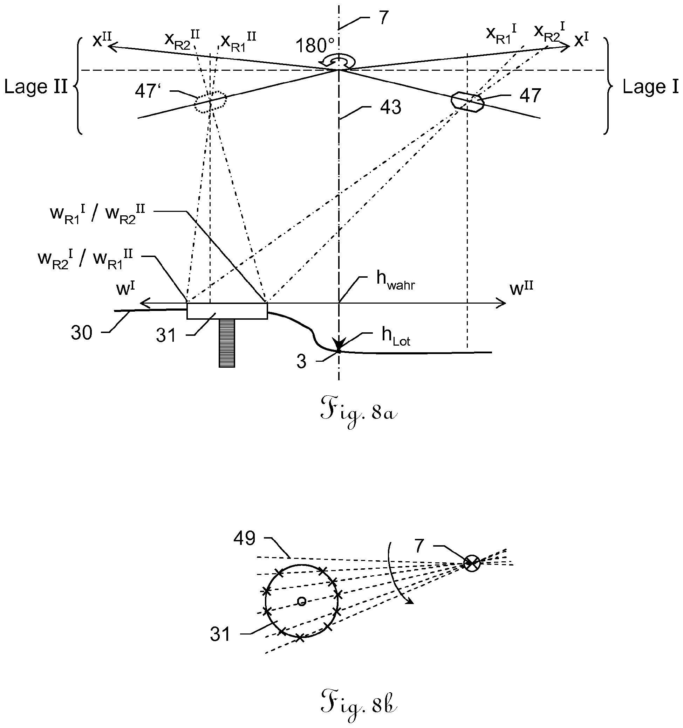

In den Figuren 8a und 8b ist beispielhaftes Verfahren illustriert, mittels welchem eine Ablage der Stehachse 7 des Vermessungsgerätes von einem Vermarkungspunkt 31 auch ohne Hilfsbodenziel ermittelbar ist.

Sofern ein definierter und durch Intensitätsscan oder Kamera identifizierbarer Vermarkungspunkt 31 vorhanden ist, kann das erfindungsgemässe System mittels Triangulation (das heisst im wesentlichen wie vorgängig beim Arbeiten mit dem Hilfsbodenziel beschrieben) die Ablage der Stehachse 7 des Vermessungsgerätes zum Vermarkungspunkt 31 bestimmen. Die eigentliche Instrumentenhöhe über dem Vermarkungspunkt 31 (h_{wahr}) und die gemessene Höhe über dem tatsächlich angezielten Bodenpunkt 3 (h_{Lot}) müssen dabei nicht identisch sein, da beide vom Empfänger gemessen werden.

Prinzipiell kann das Verfahren zwar auch mit einer Einlagenmessung durchgeführt werden, für die Genauigkeit ist aber entscheidend, dass mit hoher Messfrequenz und mindestens einer 180°-Drehung gemessen wird, vorzugsweise mit einer 360°-Drehung. Dadurch wird garantiert, dass immer in zwei Lagen gemessen wird, sofern die Aufstellungsabweichung nicht grösser ist als einige Vermarkungspunkt-Durchmesser - was auch in etwa der typischen Aufstellungsgenauigkeit entspricht. Ist die Fehlaufstellung grösser, kann aufgrund der Abschattung durch die Stativbeine nicht immer eine optimale Zweilagenmessung garantiert werden, wodurch sich die Messgenauigkeit reduzieren kann.

Im Tunnel- oder Strassenbau, wo viele repetitive Messungen mit dem der gleichen Bodenpunktmarke durchgeführt werden müssen, kann das eine erhebliche Effizienzsteigerung beim Einrichten darstellen.

Figur 8a zeigt schematisch ein Drehen des Vermessungsgerätes (bzw. von Teilen desselben) um die Stehachse 7. Das Laserlot 41 emittiert einen Laserstrahl 43 auf den Bodenpunkt 3.

Während des Drehens werden durch einen Linienlaser 47 des Gerätes verschiedene Positionen eingenommen. Hier dargestellt sind die zwei sich im 180°-Winkel gegenüberliegenden Positionen "Lage I" und "Lage II".

Der Linienlaser 47 projiziert in jeder Lage eine linienförmige Bodenmarkierung 49 auf den Boden 30 unter dem Vermessungsgerät. Auf dem Boden 30, versetzt von der Stehachse 7 und dem Bodenpunkt 3, befindet sich ein identifizierbarer Vermarkungspunkt 31, der in bestimmten Lagen des Linienlasers 47 von der linienförmigen Bodenmarkierung 49 getroffen wird, unter anderem in den beiden hier gezeigten Lagen I und II.

Ein Zeilensensor (hier nicht dargestellt), nimmt die Rückstreuung der projizierten Bodenmarkierung in jeder Lage auf (x^{I}, x^{II}). Basierend auf der erfassten Rückstreuung wird für jede Lage ein Intensitätsprofil (vgl. Figur 6) erstellt. Basierend auf der Vielzahl an Intensitätsprofilen kann der Vermarkungspunkt 31 bzw. seine Position eindeutig identifiziert werden - insbesondere durch charakteristische Rückstreuung an den Schnittpunkten der linienförmigen Bodenmarkierungen mit den Kanten des Vermarkungspunkts 31 (w_{R1}^{I}, w_{R2}^{I}, w_{R1}^{II}, w_{R2}^{II}).

Figur 8b zeigt den Vermarkungspunkt 31 von oben mit einer Vielzahl an während einer Rotation um die Stehachse 7 projizierter Linienmarkierungen 49. Die Schnittpunkte dieser Linienmarkierungen 49 mit den Kanten des Vermarkungspunktes 31 (in Figur 8b jeweils mit einem Kreuz markiert) sind in einem Intensitätsprofil von jeder der erfassten Linienmarkierungen 49 erkennbar. Durch die Vielzahl an Intensitätsprofilen sind die Richtung und Entfernung der Stehachse 7 zum Vermarkungspunkt 31 ermittelbar.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Vermessungsgerät (1) zur Positionsbestimmung eines Zielpunkts, mit
• Mitteln zum Ausrichten einer Zielachse des Vermessungsgeräts (1) auf den Zielpunkt,
• einer Winkelmessfunktionalität zur hochpräzisen Erfassung der Ausrichtung der Zielachse,
• Auswertemitteln zur Datenspeicherung, und
• einem Höhenmesssystem (40) zum Ermitteln einer Höhe des Vermessungsgerätes (1) über dem Boden (30) mittels Triangulation, wobei das Höhenmesssystem (40) mindestens aufweist
• ein Laserlot (41) zum Aussenden eines, insbesondere kollimierten, Laserstrahls (43) entlang einer Stehachse (7) des Vermessungsgerätes (1) auf einen Bodenpunkt (3) und
• eine Erfassungseinheit (42) mit einem Sensor (48) zum Erfassen einer diffusen Rückstreuung des Laserstrahls (43), wobei das Höhenmesssystem (40) zum Ermitteln einer Höhe (h) des Vermessungsgerätes (1) über dem Bodenpunkt (3) basierend auf einer Position der diffusen Rückstreuung auf dem Sensor (48) ausgestaltet ist,
**dadurch gekennzeichnet, dass**
der Sensor (48) ein Zeilensensor ist und dass
• das Höhenmesssystem (40) eine Linienlasereinheit (47) zum Projizieren einer linienförmigen Lasermarkierung (49) auf den Boden (30) aufweist, und
• die Erfassungseinheit (42) ein linienförmiges Sichtfeld (44) zum Erfassen der diffusen Rückstreuung des Laserstrahls (43) aufweist, und der Zeilensensor (48) ausgestaltet ist, die linienförmige Lasermarkierung (49) zumindest teilweise zu erfassen,
wobei das Höhenmesssystem (40) dazu ausgestaltet ist, basierend auf der erfassten linienförmigen Lasermarkierung (49) auf dem Boden (30) ein Intensitätsprofil abzuleiten, und darauf basierend eine Grösse, relative Position oder Art eines auf dem Boden (30) befindlichen normierten Bodenziels (31) zu erkennen.

2. Vermessungsgerät (1) nach Anspruch 1, wobei das Vermessungsgerät ein geodätisches Vermessungsgerät, insbesondere Theodolit, Totalstation oder Laserscanner ist mit
• einer Basis (13),
• einer gegenüber der Basis (13) um eine Stehachse (7) drehbare Stütze (12), und
• einer gegenüber der Stütze (12) um eine Querachse (8) schwenkbare Anzieleinrichtung (11) mit einer eine optische Zielachse definierenden Objektiveinheit (15),
insbesondere wobei das Vermessungsgerät (1) Mittel zum motorisierten Drehen der Stütze (12) und zum motorisierten Schwenken der Anzieleinrichtung (11) aufweist und die Auswertemittel zur Steuerung der Ausrichtung der Anzieleinrichtung (11) ausgestaltet sind.

3. Vermessungsgerät (1) nach Anspruch 1 oder Anspruch 2,
**dadurch gekennzeichnet, dass**
die Erfassungseinheit (42) und das Laserlot (41) zueinander derart angeordnet sind, dass das Höhenmesssystem (40) die Scheimpflug-Bedingung erfüllt, insbesondere wobei das Laserlot (41) und der Zeilensensor (48) in bekannter räumlicher Position zueinander angeordnet sind.

4. Vermessungsgerät (1) nach einem der vorangehenden Ansprüche,
**dadurch gekennzeichnet, dass** die Linienlasereinheit (47) und der Zeilensensor (48) fest zueinander so angeordnet sind, dass die linienförmige Lasermarkierung (49) zumindest weitgehend in das Sichtfeld (44) projizierbar ist.

5. Vermessungsgerät (1) nach einem der Ansprüche 1 bis 4,
**dadurch gekennzeichnet, dass**
der Zeilensensor (48) und die Linienlasereinheit (47) auf dem Vermessungsgerät derart angeordnet sind, dass sie gemeinsam um mindestens 180°, vorzugsweise 360° um die Stehachse (7) drehbar sind, wobei im Rahmen einer Funktionalität zur Bestimmung eines Abstandes oder einer dreidimensionalen Ablage eines Ursprungs eines lokalen Koordinatensystems des Vermessungsgerätes (1) zu dem auf dem Boden (30) befindlichen normierten Bodenziel (31), insbesondere einem Grenzstein oder einem Vermarkungspunkt,
• der Zeilensensor (48) dazu ausgestaltet ist, mit hoher Messfrequenz aus einer Vielzahl verschiedener Positionen die diffuse Rückstreuung der linienförmigen Lasermarkierung (49) zu erfassen,
• das Höhenmesssystem (40) dazu ausgestaltet ist, basierend auf den erfassten diffusen Rückstreuungen der linienförmigen Lasermarkierung (49) eine Vielzahl von Intensitätsprofilen abzuleiten, und basierend auf der Vielzahl von Intensitätsprofilen eine Position des Bodenziels (31) abzuleiten,
insbesondere wobei
• der Zeilensensor (48) und die Linienlasereinheit (47) auf dem Vermessungsgerät derart angeordnet sind, dass sie gemeinsam um mindestens 270° um die Stehachse (7) drehbar sind, insbesondere um 360°,
• das Vermessungsgerät (1) Mittel aufweist die im Rahmen einer Funktionalität zu einer motorisierten Drehung des Zeilensensors (48) und der Linienlasereinheit (47) ausgestaltet sind, und/oder
• das Höhenmesssystem (40) dazu ausgestaltet ist, basierend auf der Vielzahl von Intensitätsprofilen eine Grösse und/oder Art des Bodenziels (31) zu erkennen.

6. Vermessungsgerät (1) nach einem der vorangehenden Ansprüche, **dadurch gekennzeichnet, dass** das Vermessungsgerät (1) eine Kamera (50) aufweist, die dazu ausgestaltet ist,
• mittels Bilderkennung das auf dem Boden (30) befindliche normierte Bodenziel (31), insbesondere einen Grenzstein oder einen Vermarkungspunkt, und/oder
• mittels Bilderkennung ein auf dem Boden (30) befindliches bekanntes Hilfsbodenziel (35), insbesondere ein Ablage-Bodenziel (35a, 35b), zu erkennen und einem in einem Speicher abgespeicherten Datensatz, der mindestens Daten über eine räumliche Ausdehnung des normierten Bodenziels (31) bzw. des Hilfsbodenziels (35) umfasst, zuzuordnen, wobei das Höhenmesssystem (40) dazu ausgestaltet ist, den entsprechenden Datensatz beim Ermitteln der Höhe (h) zu berücksichtigen.

7. Vermessungsgerät (1) nach Anspruch 2, **dadurch gekennzeichnet, dass** das Vermessungsgerät (1) eine elektronische Anzeige-Steuereinheit (16) zur Steuerung des Vermessungsgerätes (1) und zur Verarbeitung, Anzeige und Speicherung von Messdaten aufweist, wobei die Anzeige-Steuereinheit (16) an der Stütze (12) angeordnet ist, und die Erfassungseinheit (42) an der Anzeige-Steuereinheit (16), insbesondere einer Unterseite der Anzeige-Steuereinheit (16), optisch stabil angeordnet ist.

8. Vermessungsgerät (1) nach einem der vorangehenden Ansprüche,
**dadurch gekennzeichnet, dass**
das Höhenmesssystem (40) zum Ausführen einer Höhenmessfunktionalität ausgestaltet ist, im Rahmen derer
• das Laserlot (41) den Laserstrahl (43) entlang der Stehachse (7) auf den Bodenpunkt (3) aussendet, und
• der Zeilensensor (48) die diffuse Rückstreuung des Laserstrahls (43) aus einer Vielzahl verschiedener Positionen erfasst,
• die Höhe (h) des Vermessungsgerätes (1) über dem Bodenpunkt (3) basierend auf den Positionen der diffusen Rückstreuung auf dem Zeilensensor (48) in der Vielzahl verschiedener Positionen ermittelt wird, insbesondere wobei zum Einnehmen der Vielzahl verschiedener Positionen durch den Zeilensensor (48) eine motorisierte Drehung der Stütze (12) gegenüber der Basis (13) um die Stehachse (7) erfolgt.

9. Vermessungsgerät (1) nach einem der vorangehenden Ansprüche,
**dadurch gekennzeichnet, dass**
• die Erfassungseinheit (42) eine Schlitzblende und/oder einen Filter, insbesondere einen Polarisationsfilter oder wellenlängenabhängigen Interferenzfilter, aufweist; und/oder
• der Zeilensensor (48) eine Vielzahl von in einer einzigen Reihe angeordneten lichtempfindlichen Elementen, insbesondere CCD- oder CMOS-Sensoren oder Photodioden, aufweist.

10. Verfahren zum Messen einer Höhe (h) eines zur Positionsbestimmung eines Zielpunkts ausgestalteten Vermessungsgerätes (1), insbesondere nach einem der Ansprüche 1 bis 9, über dem Boden (30) mittels Triangulation, mit den Schritten:
• Positionieren eines Sensors (48) an dem Vermessungsgerät (1) in bekannter Entfernung (45) zu einer Stehachse (7) des Vermessungsgerätes (1),
• Aussenden eines Laserstrahls (43) entlang der Stehachse (7) auf einen Bodenpunkt (3),
• Erfassen einer diffusen Rückstreuung des Laserstrahls (43) von dem Bodenpunkt (3) durch den Sensor (48),
• Ermitteln der Höhe (h) basierend auf einer Position der diffusen Rückstreuung auf dem Zeilensensor (48) und der bekannten Entfernung (45), **dadurch gekennzeichnet, dass** der Sensor (48) ein Zeilensensor ist, und dass das Verfahren zusätzlich umfasst:
• Projizieren einer linienförmigen Lasermarkierung (49) auf den Boden (30), mit einem eine Linienlasereinheit (47) aufweisenden Höhenmesssystem (40) des Vermessungsgerätes (1), wobei das Erfassen der diffusen Rückstreuung des Laserstrahls (43) mit einem linienförmigen Sichtfeld (44) durch eine Erfassungseinheit (42) des Höhenmesssystems (40) erfolgt, und wobei der Zeilensensor (48) ausgestaltet ist, die linienförmige Lasermarkierung (49) zumindest teilweise zu erfassen, wobei das Höhenmesssystem (40) dazu ausgestaltet ist, basierend auf der erfassten linienförmigen Lasermarkierung (49) auf dem Boden (30) ein Intensitätsprofil abzuleiten, und darauf basierend eine Grösse, relative Position oder Art eines auf dem Boden (30) befindlichen normierten Bodenziels (31) zu erkennen.

11. Verfahren nach Anspruch 10,
**gekennzeichnet durch**
• Bereitstellen von Datensätzen bekannter Bodenziele (31), insbesondere Vermarkungspunkte, und/oder Hilfsbodenziele (35), wobei die Datensätze mindestens Daten über eine räumliche Ausdehnung des jeweiligen Bodenziels (31) bzw. Hilfsbodenziels (35) aufweisen,
• Erfassen eines Bodenbildes mittels einer Kamera (50), und
• Erkennen von bekannten Bodenzielen (31) und/oder Hilfsbodenzielen (35) in dem Bodenbild mittels Bilderkennung,
wobei beim Ermitteln der Höhe (h) der entsprechende Datensatz berücksichtigt wird.

12. Verfahren nach Anspruch 10 oder Anspruch 11,
**dadurch gekennzeichnet, dass**
• das Erfassen der diffusen Rückstreuung des Laserstrahls (43) durch den Zeilensensor (48) aus einer Vielzahl verschiedener Positionen des Zeilensensors (48) erfolgt, und
• die Höhe (h) basierend auf den Positionen der diffusen Rückstreuung auf dem Zeilensensor (48) in der Vielzahl verschiedener Positionen ermittelt wird, insbesondere wobei zum Einnehmen der Vielzahl verschiedener Positionen durch den Zeilensensor (48) ein diesen aufweisender Teil des Vermessungsgerätes (1) um die Stehachse (7) gedreht wird, insbesondere motorisiert und/oder um 360°.

13. Verfahren nach einem der Ansprüche 10 bis 12,
**dadurch gekennzeichnet, dass**
zur Bestimmung eines Abstandes eines Ursprungs eines lokalen Koordinatensystems des Vermessungsgerätes (1) zu dem auf dem Boden (30) befindlichen normierten Bodenziel (31) ein den Zeilensensor (48) und eine Linienlasereinheit (47) aufweisender Teil des Vermessungsgerätes (1) um mindestens 180° um die Stehachse (7) gedreht wird, wobei
• die Linienlasereinheit (47) eine linienförmige Lasermarkierung (49) auf den Boden (30) projiziert,
• der Zeilensensor (48) mit hoher Messfrequenz aus einer Vielzahl verschiedener Positionen die diffuse Rückstreuung der linienförmigen Lasermarkierung (49) erfasst,
• basierend auf den erfassten diffusen Rückstreuungen der linienförmigen Lasermarkierung (49) eine Vielzahl von Intensitätsprofilen abgeleitet wird,
• basierend auf der Vielzahl von Intensitätsprofilen eine Position des Bodenziels (31) abgeleitet wird, und
• basierend auf der Vielzahl von Intensitätsprofilen ein Verschiebungsvektor zwischen dem mit dem Bodenziel verbundenen Koordinatensystem und dem Vermessungsgerät verbundenen Koordinatensystem abgeleitet wird,
insbesondere wobei
• die Drehung motorisiert erfolgt,
• die Drehung um mindestens 270° erfolgt, insbesondere um 360°, und/oder
• das Bodenziel (31) ein Grenzstein oder ein Vermarkungspunkt ist.

14. Verfahren nach einem der Ansprüche 10 bis 13,
**dadurch gekennzeichnet, dass**
• Koordinaten eines lokalen Koordinatensystem des Vermessungsgerätes (1) in Koordinaten eines externen Koordinatensystems transformiert werden, oder
• Koordinaten des externen Koordinatensystems in Koordinaten des lokalen Koordinatensystems transformiert werden,
insbesondere wobei
• der Ursprung des lokalen Koordinatensystems ein Schnittpunkt einer Stehachse (7) und einer Querachse (8) des Vermessungsgerätes (1) ist,
• der Bodenpunkt (3) bekannte Koordinaten in dem externen Koordinatensystem aufweist, und/oder
• Koordinaten des Zielpunktes in dem externen Koordinatensystem ermittelt werden.

## Claims

1. Surveying device (1) for determining the position of a target point, comprising
• means for orienting a target axis of the surveying device (1) towards the target point,
• an angle-measuring functionality for the highly precise detection of the orientation of the target axis, and
• evaluation means for data storage, and
• a height measuring system (40) for determining a height of the surveying device (1) above the ground (30) by means of triangulation,
wherein the height measuring system (40) at least comprises
• a laser plummet (41) for emitting a, in particular collimated, laser beam (43) along a standing axis (7) of the surveying device (1) onto a ground point (3) and
• a detection unit (42) comprising a sensor (48) for detecting a diffuse backscattering of the laser beam (43),
wherein the height measuring system (40) is designed for determining a height (h) of the surveying device (1) above the ground point (3) based on a position of the diffuse backscattering on the sensor (48),
**characterized in that**
the sensor (48) is a line sensor and that
• the height measuring system (40) comprises a line laser unit (47) for projecting a linear laser marking (49) onto the ground (30), and
• the detection unit (42) comprises a linear viewing field (44) for detecting the diffuse backscattering of the laser beam (43), and the line sensor (48) is designed for at least partially detecting the linear laser marking (49),
whereby the height measuring system (40) is designed for deriving an intensity profile based on the detected linear laser marking (49) on the ground (30) and, based thereon, detecting a size, a relative position, or a type of a standardized ground target (31) located on the ground (30).

2. Surveying device (1) according to Claim 1, wherein the surveying device is a geodetic surveying device, in particular a theodolite, a total station, or a laser scanner, comprising
• a base (13),
• a support (12) which is rotatable relative to the base (13) about a standing axis (7), and
• a targeting device (11) which is swivelable relative to the support (12) about a transverse axis (8) and comprises an objective unit (15) defining an optical target axis,
in particular wherein the surveying device (1) comprises means for the motorized rotation of the support (12) and for the motorized swiveling of the targeting device (11), and the evaluation means are designed for controlling the orientation of the targeting device (11).

3. Surveying device (1) according to Claim 1 or Claim 2,
**characterized in that**
the detection unit (42) and the laser plummet (41) are situated with respect to each other in such a way that the height measuring system (40) meets the Scheimpflug condition, in particular wherein the laser plummet (41) and the line sensor (48) are situated in a known spatial position relative to each other.

4. Surveying device (1) according to any one of the preceding claims,
**characterized in that**
the line laser unit (47) and the line sensor (48) are fixedly situated with respect to each other in such a way that the linear laser marking (49) can be at least largely projected into the viewing field (44).

5. Surveying device (1) according to Claim 4,
**characterized in that**
the line sensor (48) and the line laser unit (47) are situated on the surveying device in such a way that they can be jointly rotated through at least 180°, preferably 360° about the standing axis (7), wherein within the scope of a functionality for determining a distance or a three-dimensional offset of an origin of a local coodinate system of the surveying device (1) from a standardized ground target (31) located on the ground (30), in particular a boundary stone or a survey marker,
• the line laser unit (47) is designed for projecting a linear laser marking (49) onto the ground (30),
• the line sensor (48) is designed for detecting the diffuse backscattering of the linear laser marking (49) with a high measuring frequency from a plurality of different positions,
• the height measuring system (40) is designed for deriving a plurality of intensity profiles based on the detected diffuse backscatterings of the linear laser marking (49) and of deriving a position of the ground target (31) based on the plurality of intensity profiles,
in particular wherein
• the line sensor (48) and the line laser unit (47) are situated on the surveying device in such a way that they can be jointly rotated about the standing axis (7) through at least 270°, in particular through 360°,
• the surveying device (1) comprises means designed within the scope of a functionality for a motorized rotation of the line sensor (48) and the line laser unit (47), and/or
• the height measuring system (40) is designed for detecting a size and/or type of the ground target (31) based on the plurality of intensity profiles.

6. Surveying device (1) according to any one of the preceding claims,
**characterized in that**
the surveying device (1) comprises a camera (50) which is designed for detecting
• the standardized ground target (31), in particular a boundary stone or a survey marker, located on the ground (30), by means of image recognition, and/or
• a known supplementary ground target (35), in particular an offset ground target (35a, 35b), located on the ground (30), by means of image recognition,
and assigning these to a data record stored in a memory, which includes at least data regarding the spatial extension of the standardized ground target (31) or the supplementary ground target (35), wherein the height measuring system (40) is designed for taking the corresponding data record into account in the determination of the height (h).

7. Surveying device (1) according to Claim 2,
**characterized in that**
the surveying device (1) comprises an electronic display-control unit (16) for controlling the surveying device (1) and for processing, displaying, and storing measurement data, in particular wherein the display-control unit (16) is designed for displaying the determined height (h) and/or a three-dimensional offset, wherein the display-control unit (16) is situated on the support (12), and the detection unit (42) is situated in an optically stable manner on the display-control unit (16), in particular on an underside of the display-control unit (16).

8. Surveying device (1) according to any one of the preceding claims,
**characterized in that**
the height measuring system (40) is designed for carrying out a heigh measurement functionality, within the scope of which
• the laser plummet (41) emits the laser beam (43) along the standing axis (7) onto the ground point (3), and
• the line sensor (48) detects the diffuse backscattering of the laser beam (43) from a plurality of different positions,
• the height (h) of the surveying device (1) above the ground (3) is determined based on the positions of the diffuse backscattering on the line sensor (48) in the plurality of different positions,
in particular wherein a motorized rotation of the support (12) relative to the base (13) about the standing axis (7) is carried out in order for the line sensor (48) to assume the plurality of different positions.

9. Surveying device (1) according to any one of the preceding claims,
**characterized in that**
• the detection unit (42) comprises a slit diaphragm and/or a filter, in particular a polarization filter or wavelength-dependent interference filter; and/or
• the line sensor (48) comprises a plurality of photosensitive elements, in particular CCD or CMOS sensors or photodiodes, arranged in a single row.

10. Method for measuring a height (h) of a surveying device (1) designed for determining the position of a target point, in particular according to any one of Claims 1 to 9, above the ground (30) by means of triangulation, with the steps
• positioning a sensor (48) on the surveying device (1) at a known distance (45) from a standing axis (7) of the surveying device (1),
• emitting a laser beam (43) along the standing axis (7) onto a ground point (3),
• detecting a diffuse backscattering of the laser beam (43) from the ground point (3) by means of the sensor (48), and
• determining the height (h) based on a position of the diffuse backscattering on the sensor (48), and based on the known distance (45)
**characterized in that**
the sensor (48) is a line sensor, and that the method further comprises
• projection of a linear laser marking (49) onto the ground (30), with a height measuring system (40) of the surveying device (1) comprising a line laser unit (47), wherein the diffuse backscattering of the laser beam (43) is detected by a detection unit (42) of the height measuring system (40), and wherein the line sensor (48) is designed for at least partially detecting the linear laser marking (49), whereby the height measuring system (40) is designed for deriving an intensity profile based on the detected linear laser marking (49) on the ground (30) and, based thereon, detecting a size, a relative position, or a type of a standardized ground target (31) located on the ground (30).

11. Method according to Claim 10,
**characterized by**
• providing data records of known ground targets (31), in particular survey markers, and/or supplementary ground targets (35), wherein the data records at least comprise data regarding a spatial extension of the particular ground target (31) or supplementary ground target (35),
• detecting a ground image by means of a camera (50), and
• detecting known ground targets (31) and/or supplementary ground targets (35) in the ground image by means of image recognition,
wherein the corresponding data record is taken into account in the determination of the height (h).

12. Method according to Claim 10 or Claim 11,
**characterized in that**
• the detection of the diffuse backscattering of the laser beam (43) takes place by the line sensor (48) from a plurality of different positions of the line sensor (48), and
• the height (h) is determined based on the positions of the diffuse backscattering on the line sensor (48) in the plurality of different positions,
in particular wherein a part of the surveying device (1) comprising the line sensor (48) is rotated about the standing axis (7), in particular in a motorized manner and/or through 360°, in order for said line sensor to assume the plurality of different positions.

13. Method according to any one of Claims 10 to 12,
**characterized in that**
a part of the surveying device (1) comprising the line sensor (48) and a line laser unit (47) is rotated through at least 180° about the standing axis (7) in order to determine a distance of an origin of a local coordinate system of the surveying device (1) to the standardized ground target (31) located on the ground (30), wherein
• the line laser unit (47) projects a linear laser marking (49) onto the ground (30),
• the line sensor (48) detects the diffuse backscattering of the linear laser marking (49) with high measuring frequency from a plurality of different positions,
• a plurality of intensity profiles is derived based on the detected diffuse backscatterings of the linear laser marking (49),
• a position of the ground target (31) is derived based on the plurality of intensity profiles, and
• a displacement vector between the coordinate system associated with the ground target and the coordinate system associated with the surveying device is derived based on the plurality of intensity profiles,
in particular wherein
• the rotation takes place in a motorized manner,
• the rotation takes place through at least 270°, in particular through 360°, and/or
• the ground target (31) is a boundary stone or a survey marker.

14. Method according to any one of Claims 11 to 14,
**characterized in that**
• coordinates of a local coordinate system of the surveying device (1) are transformed into coordinates of an external coordinate system, or
• coordinates of the external coordinate system are transformed into coordinates of the local coordinate system,
in particular wherein
• the origin of the local coordinate system is a point of intersection of a standing axis (7) and a transverse axis (8) of the surveying device (1),
• the ground point (3) has known coordinates in the external coordinate system, and/or
• coordinates of the target point are determined in the external coordinate system.

## Revendications

1. Appareil de mesure (1) permettant de déterminer la position d'un point cible, comportant
• des moyens permettant d'orienter l'axe de visée de l'appareil de mesure (1) vers le point cible,
• une fonctionnalité de mesure d'angle destinée à l'acquisition ultra-précise de l'orientation de l'axe de visée,
• des moyens d'évaluation destinés au stockage de données, et
• un système de mesure de hauteur (40) permettant d'établir par triangulation la hauteur de l'appareil de mesure (1) par rapport au sol (30),
le système de mesure de hauteur (40) présentant au moins
• un aplomb laser (41) destiné à émettre un rayon laser (43), notamment collimaté, le long d'un axe vertical (7) de l'appareil de mesure (1) vers un point au sol (3), et
• une unité de détection (42) dotée d'un capteur (48) et destinée à détecter une rétrodiffusion diffuse du rayon laser (43),
le système de mesure de hauteur (40) étant conçu pour établir la hauteur (h) de l'appareil de mesure (1) par rapport au point au sol (3) à partir de la position de la rétrodiffusion diffuse sur le capteur (48),
**caractérisé en ce que**
le capteur (48) est un capteur de ligne et **en ce que**
• le système de mesure de hauteur (40) présente une unité de ligne laser (47) destinée à projeter sur le sol (30) un marquage laser linéaire (49), et
• l'unité de détection (42) présente un champ de vision (44) linéaire permettant de détecter la rétrodiffusion diffuse du rayon laser (43), et le capteur de ligne (48) est conçu pour détecter au moins en partie le marquage laser linéaire (49),
le système de mesure de hauteur (40) étant conçu pour déduire un profil d'intensité à partir du marquage laser linéaire (49) détecté sur le sol (30), et pour reconnaître à partir dudit profil d'intensité une dimension, une position relative ou le type d'une cible au sol (31) normée située sur le sol (30).

2. Appareil de mesure (1) selon la revendication 1, dans lequel l'appareil de mesure est un appareil de mesure géodésique, notamment un théodolite, une station totale ou un laser de relevé, comportant
• une base (13),
• un support (12) susceptible de tourner sur un axe vertical (7) par rapport à la base (13),
• un dispositif de visée (11) susceptible de pivoter sur un axe transversal (8) par rapport au support (12) et comportant une unité d'objectif (15) définissant un axe de visée optique,
l'appareil de mesure (1) présentant notamment des moyens de rotation motorisée du support (12) et de pivotement motorisé du dispositif de visée (11), et les moyens d'évaluation étant conçus pour commander l'orientation du dispositif de visée (11).

3. Appareil de mesure (1) selon la revendication 1 ou 2,
**caractérisé en ce que**
la disposition relative de l'unité de détection (42) et de l'aplomb laser (41) est telle que le système de mesure de hauteur (40) remplit la condition de Scheimpflug, la position dans l'espace de l'aplomb laser (41) et du capteur de ligne (48) l'un par rapport à l'autre étant notamment connue.

4. Appareil de mesure (1) selon l'une des revendications précédentes,
**caractérisé en ce que**
l'unité de ligne laser (47) et le capteur de ligne (48) sont disposés de manière fixe l'un par rapport à l'autre de façon que le marquage laser linéaire (49) peut être projeté au moins en grande partie dans le champ de vision (44).

5. Appareil de mesure (1) selon l'une des revendications 1 à 4,
**caractérisé en ce que**
la disposition du capteur de ligne (48) et de l'unité de ligne laser (47) sur l'appareil de mesure est telle qu'ils peuvent être amenés à tourner ensemble sur au moins 180°, de préférence 360°, sur l'axe vertical (7) ; dans lequel, dans le cadre d'une fonctionnalité de détermination de la distance ou du décalage tridimensionnel de l'origine d'un système de coordonnées local de l'appareil de mesure (1) par rapport à la cible au sol (31) normée située sur le sol (30), notamment une borne ou un point de marquage,
• le capteur de ligne (48) est conçu pour détecter la rétrodiffusion diffuse du marquage laser linéaire (49), à une fréquence de mesure élevée et à partir d'une pluralité de positions différentes,
• le système de mesure de hauteur (40) est conçu pour déduire une pluralité de profils d'intensité à partir des rétrodiffusions diffuses détectées du marquage laser linéaire (49), et pour déduire une position de la cible au sol (31) à partir de la pluralité de profils d'intensité,
notamment dans lequel
• la disposition du capteur de ligne (48) et de l'unité de ligne laser (47) sur l'appareil de mesure est telle qu'ils peuvent être amenés à tourner ensemble sur au moins 270° sur l'axe vertical (7), notamment de 360°,
• l'appareil de mesure (1) présente des moyens conçus pour faire tourner de manière motorisée le capteur de ligne (48) et l'unité de ligne laser (47) dans le cadre d'une fonctionnalité, et/ou
• le système de mesure de hauteur (40) est conçu pour reconnaître une dimension et/ou le type de la cible au sol (31) à partir de la pluralité de profils d'intensité.

6. Appareil de mesure (1) selon l'une des revendications précédentes,
**caractérisé en ce que**
l'appareil de mesure (1) présente une caméra (50) conçue pour reconnaître :
• par reconnaissance d'image, la cible au sol (31) normée située sur le sol (30), notamment une borne ou un point de marquage, et/ou
• par reconnaissance d'image, une cible annexe au sol (35) connue située sur le sol (30), notamment une cible au sol décalée (35a, 35b),
et pour attribuer un jeu de données enregistré dans une mémoire et comprenant au moins des données sur l'étendue spatiale de la cible au sol (31) normée ou de la cible annexe au sol (35), le système de mesure de hauteur (40) étant conçu pour tenir compte dudit jeu de données lors de l'établissement de la hauteur (h).

7. Appareil de mesure (1) selon la revendication 2,
**caractérisé en ce que**
l'appareil de mesure (1) présente une unité de commande et d'affichage (16) électronique destinée à commander l'appareil de mesure (1) et à traiter, afficher et enregistrer des données de mesure,
l'unité de commande et d'affichage (16) étant disposée sur le support (12), et
l'unité de détection (42) étant disposée de manière optiquement stable sur
l'unité de commande et d'affichage (16), notamment sur une face inférieure de
l'unité de commande et d'affichage (16).

8. Appareil de mesure (1) selon l'une des revendications précédentes, **caractérisé en ce que**
le système de mesure de hauteur (40) est conçu pour exécuter une fonctionnalité de mesure de hauteur, dans le cadre de laquelle
• l'aplomb laser (41) émet le rayon laser (43) le long de l'axe vertical (7) vers le point au sol (3), et
• le capteur de ligne (48) détecte la rétrodiffusion diffuse du rayon laser (43) à partir d'une pluralité de positions différentes,
• la hauteur (h) de l'appareil de mesure (1) par rapport au point au sol (3) est établie à partir de la position de la rétrodiffusion diffuse sur le capteur de ligne (48) dans la pluralité de positions différentes,
notamment dans lequel le support (12) est amené à tourner de manière motorisée sur l'axe vertical (7) par rapport à la base (13) afin que le capteur de ligne (48) prenne la pluralité de positions différentes.

9. Appareil de mesure (1) selon l'une des revendications précédentes, **caractérisé en ce que**
• l'unité de détection (42) présente un diaphragme à fente et/ou un filtre, notamment un filtre polarisant ou un filtre d'interférence dépendant de la longueur d'ondes, et/ou
• le capteur de ligne (48) présente une pluralité d'éléments photosensibles disposés sur une seule ligne, notamment des capteurs CCD ou CMOS ou des photodiodes.

10. Procédé de mesure par triangulation de la hauteur (h) par rapport au sol (30) d'un appareil de mesure (1) conçu pour déterminer la position d'un point cible, notamment selon l'une des revendications 1 à 9, ledit procédé comportant les étapes suivantes :
• positionnement d'un capteur (48) sur l'appareil de mesure (1) à une distance connue (45) d'un axe vertical (7) de l'appareil de mesure (1),
• émission d'un rayon laser (43) le long de l'axe vertical (7) vers un point au sol (3),
• détection par le capteur (48) d'une rétrodiffusion diffuse du rayon laser (43) par le point au sol (3),
• établissement de la hauteur (h) à partir d'une position de la rétrodiffusion diffuse sur le capteur (48) et de la distance connue (45),
**caractérisé en ce que**
le capteur (48) est un capteur de ligne et **en ce que** le procédé comporte en outre les étapes suivantes :
• projection sur le sol (30) d'un marquage laser linéaire (49) au moyen d'un système de mesure de hauteur (40) de l'appareil de mesure (1) présentant une unité de ligne laser (47) ; la rétrodiffusion diffuse du rayon laser (43) étant détectée dans un champ de vision (44) linéaire par une unité de détection (42) du système de mesure de hauteur (40), et le capteur de ligne (48) étant conçu pour détecter au moins en partie le marquage laser linéaire (49), le système de mesure de hauteur (40) étant conçu pour déduire un profil d'intensité à partir du marquage laser linéaire (49) détecté sur le sol (30), et pour reconnaître à partir dudit profil d'intensité une dimension, une position relative ou le type d'une cible au sol (31) normée située sur le sol (30).

11. Procédé selon la revendication 10,
**caractérisé par**
• la mise à disposition de jeux de données relatifs à des cibles au sol (31) connues, notamment à des points de marquage et/ou des cibles annexes au sol (35), les jeux de données comportant au moins des données sur l'étendue spatiale de ladite cible au sol (31) ou de ladite cible annexe au sol (35),
• l'acquisition d'une image du sol au moyen d'une caméra (50), et
• la reconnaissance de cibles au sol (31) connues et/ou de cibles annexes au sol (35) connues dans l'image du sol, par reconnaissance d'image,
le jeu de données correspondant étant pris en compte dans l'établissement de la hauteur (h).

12. Procédé selon la revendication 10 ou 11,
**caractérisé en ce que**
• le capteur de ligne (48) détecte la rétrodiffusion diffuse du rayon laser (43) à partir d'une pluralité de positions différentes du capteur de ligne (48), et
• la hauteur (h) est établie à partir de la position de la rétrodiffusion diffuse sur le capteur de ligne (48) dans la pluralité de positions différentes,
notamment dans lequel une pièce de l'appareil de mesure (1) comportant le capteur de ligne (48) est amené à tourner sur l'axe vertical (7), notamment de manière motorisée et/ou sur 360°, afin que ledit capteur de ligne prenne la pluralité de positions différentes.

13. Procédé selon l'une des revendications 10 à 12,
**caractérisé en ce que**
une pièce de l'appareil de mesure (1) comportant le capteur de ligne (48) et une unité de ligne laser (47) est amenée à tourner sur au moins 180° sur l'axe vertical (7), afin de déterminer la distance de l'origine d'un système de coordonnées local de l'appareil de mesure (1) par rapport à la cible au sol (31) normée située sur le sol (30) ; dans lequel
• l'unité de ligne laser (47) projette un marquage laser linéaire (49) sur le sol (30),
• le capteur de ligne (48) détecte la rétrodiffusion diffuse du marquage laser linéaire (49) à une fréquence de mesure élevée, à partir d'une pluralité de positions différentes,
• à partir des rétrodiffusions diffuses détectées du marquage laser linéaire (49), il est déduit une pluralité de profils d'intensité,
• à partir de la pluralité de profils d'intensité, il est déduit une position de la cible au sol (31), et
• à partir de la pluralité de profils d'intensité, il est déduit un vecteur de décalage entre le système de coordonnées lié à la cible au sol et le système de coordonnées lié à l'appareil de mesure,
notamment dans lequel
• la rotation est motorisée,
• la rotation a lieu sur au moins 270°, notamment sur 360°, et/ou
• la cible au sol (31) est une borne ou un point de marquage.

14. Procédé selon l'une des revendications 10 à 13,
**caractérisé en ce que**
• les coordonnées d'un système de coordonnées local de l'appareil de mesure (1) sont transformées en coordonnées d'un système de coordonnées externe, ou
• les coordonnées du système de coordonnées externe sont transformées en coordonnées du système de coordonnées local,
notamment dans lequel
• l'origine du système de coordonnées local est située à l'intersection d'un axe vertical (7) et d'un axe transversal (8) de l'appareil de mesure (1),
• le point au sol (3) possède des coordonnées connues dans le système de coordonnées externe, et/ou
• les coordonnées du point cible sont établies dans le système de coordonnées externe.
